# EUROPÄISCHE PATENTSCHRIFT

(11) **EP 2 383 071 B1**
(45) Veröffentlichungstag und Bekanntmachung des Hinweises auf die Patenterteilung: **05.12.2012**
(21) Anmeldenummer: 10163743.7
(22) Anmeldetag: 25.05.2010
(51) Int. Cl.: B23Q 11/00

(54) **Zusatzeinrichtung und System aus einer Elektroarbeitsmaschine mit einer Zusatzeinrichtung**
Add-on device and system comprising an electric work machine with an add-on device
Dispositif supplémentaire et système constitué d'une machine de travail électrique dotée d'un dispositif supplémentaire

(30) Priorität: 28.04.2010 DE 102010028302
(43) Veröffentlichungstag der Anmeldung: 02.11.2011
(73) Patentinhaber: HILTI Aktiengesellschaft, 9494 Schaan (LI)
(72) Erfinder: Ohlendorf, Oliver, 86899 Landsberg (DE)

(56) Entgegenhaltungen:
- DE-U1- 9 306 373
- DE-U1-202007 010 514

## Beschreibung

### Technisches Gebiet

Die Erfindung betrifft eine Zusatzeinrichtung. Die Erfindung betrifft auch ein System aus einer Elektroarbeitsmaschine und einer Zusatzeinrichtung..

Eine Elektroarbeitsmaschine der eingangs genannten Art dient vor allem zum Bearbeiten mineralischen Materials wie Stein, Beton oder dergleichen. Dazu kann die Elektroarbeitsmaschine mit einem Werkzeug, beispielsweise in Form eines Bohrers oder eines Meißels bestückt werden, welches mit einer Welle in der Werkzeugaufnahme der Elektroarbeitsmaschine aufgenommen ist. Beim Bearbeiten oder Zerkleinern mineralischen Materials wie Stein oder Beton, jedoch auch Holz oder dergleichen, soll die Werkzeugaufnahme vor anfallendem Staub, Spänen oder sonstigem Zerkleinerungsgut durch eine eingangs genannte Zusatzeinrichtung geschützt werden bzw. soll Zerkleinerungsgut von der Zusatzeinrichtung aufgefangen und ggfs. abgeführt werden. Die Zusatzeinrichtung ist über eine Befestigungseinrichtung, zum Beispiel klemmend, an der Elektroarbeitsmaschine befestigt und letztere kann zudem über einen Handgriff der Zusatzeinrichtung gehalten werden.

### Stand der Technik

Eine gattungsgemäβe Zusatzeinrichtung der Anmelderin ist als Saugvorsatz beispielsweise aus DE2744463C2 bekannt und bildet die Basis für den Oberbegriff des Anspruchs 1. Eine mit einer Saugvorrichtung versehene Zusatzeinrichtung ohne Handgriff ist beispielsweise in GB 1334366 beschrieben.

DE 93 06 373 U1 beschreibt eine Vorrichtung zum Absaugen des Bohrstaubs einer Bohrmaschine. Die Vorrichtung kann mit einer Halterung an einem Hals der Bohrmaschine befestigt werden. Eine zu der Bohrachse koaxiale Saugeinheit ist über verschiebliche Führungen mit der Halterung verbunden. Die Führungen sind versetzt zu der Bohrachse angeordnet. Die axiale Position der Saugeinheit gegenüber der Bohrmaschine kann mittels der Führungen eingestellt werden.

DE 20 2007 010 514 U1 beschreibt eine Vorrichtung zum Absaugen von Staub. Eine Einrichtung zur Abdeckung einer Werkzeugansatzstelle ist über eine Saugverbindung mit einem Zusatzhandgriff verbunden. Ein Saugstrom verläuft durch einen Hohlraum in dem Zusatzhandgriff, die Saugverbindung und die Einrichtung zur Abdeckung der Werkzeugansatzstelle. Die Saugverbindung ist als Teleskoprohr ausgebildet, welches versetzt zu der Bohrerachse verläuft.

Eine an der Elektroarbeitsmaschine anbringbare Zusatzeinrichtung mit einem Saugkopf und einem Handgriff ist beispielsweise in DE 2005 058 791 B3 oder FR 2763528 beschrieben. Eine eingangs genannte Zusatzeinrichtung und ein eingangs genanntes System aus einer Elektroarbeitsmaschine mit einer Zusatzeinrichtung ist aus DE 740 48 96 U1 bekannt. Die dort genannte Zusatzeinrichtung umgibt insbesondere die Werkzeugaufnahme mit einer Aufnahmekammer für Zerkleinerungsgut und führt dieses über den Handgriff der Zusatzeinrichtung ab. Die Zusatzeinrichtung ist an einer Halspartie eines Maschinengehäuses der Elektroarbeitsmaschine befestigt.

Eine solche Zusatzeinrichtung und ein solches System aus einer Elektroarbeitsmaschine und Zusatzeinrichtung ist noch verbesserbar. Es hat sich gezeigt, dass es im Betrieb einer Elektroarbeitsmaschine -insbesondere einer Schlagbohrmaschine, eines Bohrhammers oder einer Meisselhammer-Maschine sowie vergleichbarer Kombibohrmaschinen- zu einem unerwünschten Kontakt zwischen Werkzeugaufnahme und Zusatzeinrichtung der vorgenannten Art kommen kann. Dies kann zu einer unerwünschten Kopplung und Kraftübertragung zwischen Zusatzeinrichtung und Elektroarbeitsmaschine führen, beispielsweise beim Bohrbetrieb zum Rotieren der gesamten Zusatzeinrichtung mit gegebenenfalls angeschlossenen Absaugeinheiten führen. Dies kann den Anwender verunsichern oder gar verletzen. Auch kann die Zusatzeinrichtung, insbesondere eine Absaugeinheit, beschädigt werden.

Darüberhinaus hat sich gezeigt, dass ein Ablegen eines vorgenannten Systems aus einer Elektroarbeitsmaschine und Zusatzeinrichtung vor allem eine Schlagbelastung der Zusatzeinrichtung zur Folge haben kann, beispielsweise wenn die Elektroarbeitsmaschine auf das Frontende der Zusatzeinrichtung fallen gelassen wird. In solchen Fällen könnte bei den bekannten Systemen das Gehäuse der Zusatzeinrichtung an die Werkzeugaufnahme schlagen. Insbesondere führt eine im Stand der Technik bekannte Befestigungsart dazu, dass solche Schläge direkt auf ein Maschinengehäuse der Elektroarbeitsmaschine übertragen werden. Auch im Betrieb der Elektroarbeitsmaschine können Schläge und Stösse bei einer bekannten und noch verbesserungswürdigen Befestigungsart zwischen Zusatzeinrichtung und Elektroarbeitsmaschine den Anwender nachteilig beeinflussen.

Wünschenswert wäre es, nachteilige Einflüsse bei Betrieb und/oder Handhabung einer Elektroarbeitsmaschine mit Zusatzeinrichtung zu vermeiden. An dieser Stelle setzt die Erfindung an, deren Aufgabe es ist, eine Zusatzeinrichtung und ein System aus einer Elektroarbeitsmaschine und einer Zusatzeinrichtung anzugeben, die gegenüber dem Stand der Technik verbessert sind. Insbesondere sollen die vorgenannten Nachteile bei einer Zusatzeinrichtung und einem System aus einer Elektroarbeitsmaschine und der Zusatzeinrichtung vermieden sein. Insbesondere soll eine Zusatzeinrichtung und ein System aus einer Elektroarbeitsmaschine und einer Zusatzeinrichtung derart verbessert sein, dass eine nachteilige Wechselwirkung zwischen Zusatzeinrichtung und Elektroarbeitsmaschine bei Betrieb und Handhabung weitgehend vermieden ist.

### Darstellung der Erfindung

Die Erfindung geht von der Überlegung aus, dass eine im Stand der Technik bekannte Zusatzeinrichtung zwar durch ein vollständig geschlossenes Aufnehmen einer Werkzeugaufnahme in einer Aufnahmekammer bereits einen Schutz der Werkzeugaufnahme vor Staub, Spänen oder sonstigem Zerkleinerungsgut erreichen könnte. Jedoch kann gleichwohl ein unerwünschter Kontakt zwischen Werkzeugaufnahme der Elektroarbeitsmaschine und Aufnahmekammer der Zusatzeinrichtung zu einer unerwünschten Kopplung und ggfs. bemerkbaren Kraftübertragung führen. Die Erfindung hat erkannt, dass eine weitgehende Entkopplung von Zusatzeinrichtung und Elektroarbeitsmaschine, insbesondere Entkopplung von Werkzeugaufnahme und Aufnahmekammer zu einer vorteilhaften Ausbildung der Zusatzeinrichtung und des Systems aus Elektroarbeitsmaschine und Zusatzeinrichtung führt. Eine Werkzeugaufnahme und eine Aufnahmekammer sollen selbst bei ungünstiger Belastung wirksam entkoppelt sein. Eine Entkopplung wird gemäss dem Konzept der Erfindung unter anderem durch eine die Werkzeugaufnahme seitlich frei zugänglich lassende Öffnung erreicht.

Zum Einen ermöglicht nämlich die die Werkzeugaufnahme seitlich frei zugänglich lassende Öffnung einen direkten Zugriff auf die Werkzeugaufnahme, beispielsweise das Lösen des Werkzeugs oder dergleichen auch bei an der Elektroarbeitsmaschine angebrachter Zusatzeinrichtung. Zum anderen kann selbst eine infolge von Schlägen beim Betrieb oder beim Ablegen der Elektroarbeitsmaschine mit Zusatzeinrichtung erfolgende relative Verschiebung der Elektroarbeitsmaschine und Zusatzeinrichtung gegeneinander nicht dazu führen, dass die Werkzeugaufnahme in Kontakt mit der Aufnahmekammer kommt; die wenigstens die Werkzeugaufnahme seitlich frei zugänglich lassende Öffnung erlaubt nämlich einen ausreichenden Freiraum der Werkzeugaufnahme relativ zur Zusatzeinrichtung. Eine ungünstige Kraftübertragung zwischen Zusatzeinrichtung und Elektroarbeitsmaschine ist dadurch weitestgehend unterbunden. Zudem sind Schläge oder sonstige Stöße durch die Ausbildung der Zusatzeinrichtung weitestgehend abgefedert und gedämpft, jedenfalls aber abgekoppelt von der Elektroarbeitsmaschine. Dazu sieht die Erfindung vor, dass der mit dem Hantierabschnitt und der Befestigungseinrichtung fest verbundene Handgriff über die Befestigungseinrichtung an der Elektroarbeitsmaschine befestigt ist.

Es ist vorgesehen, dass der Hantierabschnitt und die Befestigungseinrichtung in einer axialen Richtung nebeneinander angeordnet sind. Dabei ist insbesondere vorgesehen, dass der Hantierabschnitt mit dem in radialer Richtung abstehenden Handgriff unmittelbar verbunden ist und dennoch axial unter Belassen eines Abstands neben der Befestigungseinrichtung angeordnet ist. In der bevorzugten Weiterbildung ist der Hantierabschnitt insbesondere nicht direkt mit der Befestigungseinrichtung verbunden, sondern vielmehr nur mittelbar über den Handgriff mit der Befestigungseinrichtung verbunden. Insbesondere ist gemäß dieser Weiterbildung ein Freistellspalt zwischen Hantierabschnitt und Befestigungseinrichtung vorgesehen. Beispielsweise ist die Zusatzeinrichtung mit einem Hantierabschnitt versehen, der mit dem Handgriff fest verbunden ist und wobei der Handgriff mit der Befestigungseinrichtung fest verbunden ist. Insgesamt ergibt dies vorzugsweise eine praktisch U-förmige Anordnung von Hantierabschnitt, Handgriff und Befestigungseinrichtung. Eine solche in sich schwingungsfähige U-förmige Anordnung ermöglicht eine besonders vorteilhafte Abfederung von Schlägen oder dergleichen und vermeidet oder dämpft ungünstige Kopplungen zwischen Zusatzeinrichtung und Elektroarbeitsmaschine. Das Gehäuse aus Hantierabschnitt, Handgriff und Befestigungseinrichtung ist vorzugsweise einstückig gebildet.

Das Gehäuse weist ein Basisteil mit einer Aufnahmekammer auf, wobei der Hantierabschnitt zwischen dem Basisteil und der Befestigungseinrichtung angeordnet ist. Die Aufnahmekammer dient zur Aufnahme und ggfs. Weiterleitung von Zerkleinerungsgut, das beim Bearbeiten von Material mit dem Werkzeug entsteht. Ein Basisteil kann einstückig oder lösbar fest mit dem Hantierabschnitt verbunden sein. Am Basisteil sind verzugsweise weitere Anschlussteile wie ein Gehäusekopf, eine Saugleitung und/oder eine weiter unten erläuterte Frontkappe angeschlossen sein. Dazu weist das Basisteil vorzugsweise wenigstens einen Adapteranschluss auf.

Der Hantierabschnitt hat wenigstens eine die Werkzeugaufnahme, insbesondere zweiseitg frei zugänglich lassende Öffnung. Dies macht die Werkzeugaufnahme selbst bei angeschlossener Zusatzeinrichtung vergleichsweise leicht zugänglich, um diese beispielsweise für eine Aufnahme des Werkzeugs durch den Anwender zu entriegeln oder zu verriegeln. Auch steht ein vergrösserter Freiraum für die Werkzeugaufnahme zur Verfügung, der bei einem Verrücken der Werkzeugaufnahme relativ zur Zusatzeinrichtung genutzt werden kann. Ein unerwünschter kraftübertragender Kontakt zwischen Werkzeugaufnahme und Zusatzeinrichtung ist dadurch weitestgehend unterbunden. Die die Werkzeugaufnahme seitlich frei zugänglich lassende Öffnung ist durch axial verlaufende Axialstreben und umfänglich verlaufende Ringstreben begrenzt. Der Hantierabschnitt kann so vorteilhaft als ein in etwa zylinderförmiges aus wenigstens einer Ober- und einer Unterstrebe sowie einer vorderen Ringstrebe und hinteren Ringstrebe gebildeter Abschnitt des Gehäuses mit vergleichsweise großen Öffnungen versehen sein. Darüberhlnaus verleihen Axialstreben und/oder Ringstreben dem Hantierabschnitt eine gewisse federnde bzw. dämpfende Wirkung zwischen Basisteil und Handgriff gegen Schläge oder Stösse. Auf das Basisteil oder auf eine Frontkappe oder ein sonstiges Anschlussteil wie ein Saugkopf oder Bearbeitungskopf wirkende Kräfte können durch den Hantierabschnitt abgedämpft oder abgefedert werden, so dass diese in jedenfalls verringerter Weise oder gar nicht auf ein Maschinengehäuse der Elektroarbeitsmaschine übertragen werden.

Es hat sich als besonders vorteilhaft erwiesen, dass eine Öffnungsweite der die Werkzeugaufnahme seitlich frei zugänglich lassenden Öffnung im Wesentlichen auf die Ausdehnung der Werkzeugaufnahme beschränkt ist. Dadurch wird ein besonders vorteilhafter Kompromiss zwischen Staubschutz einerseits und Hantiermöglichkeit an der Werkzeugaufnahme andererseits erreicht. Im an der Elektroarbeitsmaschine angebrachten Zustand der Zusatzeinrichtung befindet sich ein Hantierabschnitt in axialer Richtung bevorzugt auf Höhe des Werkzeughalters. Ein Basisteil der Zusatzeinrichtung ist dabei vorzugsweise dem Werkzeughalter vorgelagert. Insbesondere ist dabei eine Aufnahmekammer und das Basisteil vor dem Werkzeughalter angeordnet, um einen bestmöglichen Schutz des Werkzeughalters vor Zerkleinerungsgut zu erreichen. Der Handgriff der Zusatzeinrichtung ist im Anbringungszustand besonders bevorzugt auf Höhe einer Halspartie zwischen Maschinengehäuse und Antriebswelle des Werkzeughalters angeordnet, beispielsweise dort klemmend über eine Rohrschelle oder dergleichen befestigt.

Gemäß der bereits oben erläuterten besonders bevorzugten Weiterbildung zum Konzept der Erfindung ist im Anbringungszustand der Zusatzeinrichtung der Hantierabschnitt nur mittelbar über den Handgriff und nur über die Befestigungseinrichtung am Handgriff am Maschinengehäuse befestigt. Dadurch ergibt sich in der bereits oben erläuterten Weise eine besonders geeignete, Schläge abfedernde, praktisch U-förmige Anordnung von Hantierabschnitt, Handgriff und Befestigungseinrichtung der Zusatzeinrichtung relativ zum Maschinengehäuse der Elektroarbeitsmaschine. In besonders bevorzugter Weise ist der Hantierabschnitt mit dem Handgriff über in axialer Richtung verlaufende Stützrippen fest verbunden. Die Stützrippen weisen besonders bevorzugt eine Dreiecksform auf. Auf diese Weise ist eine oben erläuterte besonders bevorzugte, praktisch U-förmige Anordnung von Hantierabschnitt, Handgriff und Befestigungseinrichtung an der unmittelbaren Verbindungsstelle zwischen Hantierabschnitt und Handgriff federnd und dennoch stabil ausgebildet.

Vorzugsweise ist wenigstens der Hantierabschnitt und der Handgriff einstückig gebildet. Beispielsweise können der Hantierabschnitt und der Handgriff als Formteil vergleichsweise einfach gebildet sein. In einer besonders bevorzugten Weiterbildung kann auch das Basisteil zusammen mit dem Hantierabschnitt und dem Handgriff einstückig, insbesondere als Formteil, gebildet sein. Besonders vorteilhaft kann auch eine am Basisteil in axialer Richtung gegenüber dem Hantierabschnitt angeordnete Frontkappe vergleichsweise einfach einstückig mit dem Basisteil gebildet sein. Insbesondere kann die Frontkappe und das Basisteil zusammen mit dem Hantierabschnitt sowie dem Handgriff einstückig gebildet sein. Das Gehäuse der Zusatzeinrichtung ist gemäß dieser Weiterbildung in sich besonders stabil und dennoch abfedernd ausgebildet.

In einer zu dieser Weiterbildung variierten Weiterbildung kann das Basisteil wenigstens einen Adapteranschluss aufweisen. Vorzugsweise ist ein der Elektroarbeitsmaschine zugewandter Adapteranschluss für einen Hantierabschnitt vorgesehen. Vorzugsweise ist ein in axialer Richtung dazu gegenüber liegender Adapteranschluss für eine Frontkappe oder ein anderes Anschlussteil wie einen Saugkopf, Bearbeitungskopf oder dergleichen Gehäusekopf gebildet. Das Basisteil kann auf diese Weise besonders flexibel ausgelegt sein, um unterschiedliche Anschlussteile -beispielsweise eine Frontkappe, einen Saugkopf oder einen Bearbeitungskopf oder dergleichen Gehäusekopf- je nach Bedarf wieder lösbar am Basisteil anzubringen. Beispielsweise kann ein Basisteil mit oder ohne Saugstutzen ausgeführt sein. Ein Saugstutzen hat einen Sauganschluss für eine Saugleitung. Der Saugstutzen ist in besonders bevorzugter Weise schräg zu einer axialen Richtung des Basisteils geneigt.

Die Frontkappe weist vorzugsweise eine ein Werkzeug vergleichsweise eng umfassende axiale Durchlassöffnung für das Werkzeug auf. Eine Frontfläche der Frontkappe bildet so ein vorteilhaftes Spülschott gegen Zerkleinerungsgut, so dass die Werkzeugaufnahme gegen einen Eintritt von Zerkleinerungsgut besonders gut geschützt ist. Eine derart ausgebildete Frontkappe bildet auch in besonders bevorzugter Weise zusammen mit dem Basisteil einen Frontbecher mit der Aufnahmekammer für Zerkleinerungsgut.

Es hat sich als vorteilhaft erwiesen, dass ein Material des Handgriffs und/oder des Hantierabschnitts weicher als ein Material des Basisteils ist. Der Einfluss von Schlägen und Vibrationen auf die Elektroarbeitsmaschine und einen Anwender ist so vergleichsweise gering gehalten bzw. gedämpft.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 in Ansicht (A) eine Seitenansicht der in Ansicht (B) der Fig. 1 gezeigten Zusatzeinrichtung gemäß einer ersten Ausführungsform als Staubschutzeinrichtung;
Fig. 2 ein System aus der Zusatzeinrichtung der Fig. 1 und einer Elektroarbeitsmaschine, vorliegend in Form einer Bohrhammer-Kombimaschine;
Fig. 3 eine Seitenansicht einer zweiten Ausführungsform einer Zusatzeinrichtung in Form einer Staubabsaugeinrichtung, wobei das Basisteil einen Saugstutzen und einen Adapteranschluss für den Hantierabschnitt und eine Frontkappe aufweist;
Fig.4 ein System aus einer Elektroarbeitsmaschine, vorliegend in Form einer Bohrhammer-Kombimaschine, mit aufgesetzter Zusatzeinrichtung der Fig. 3.

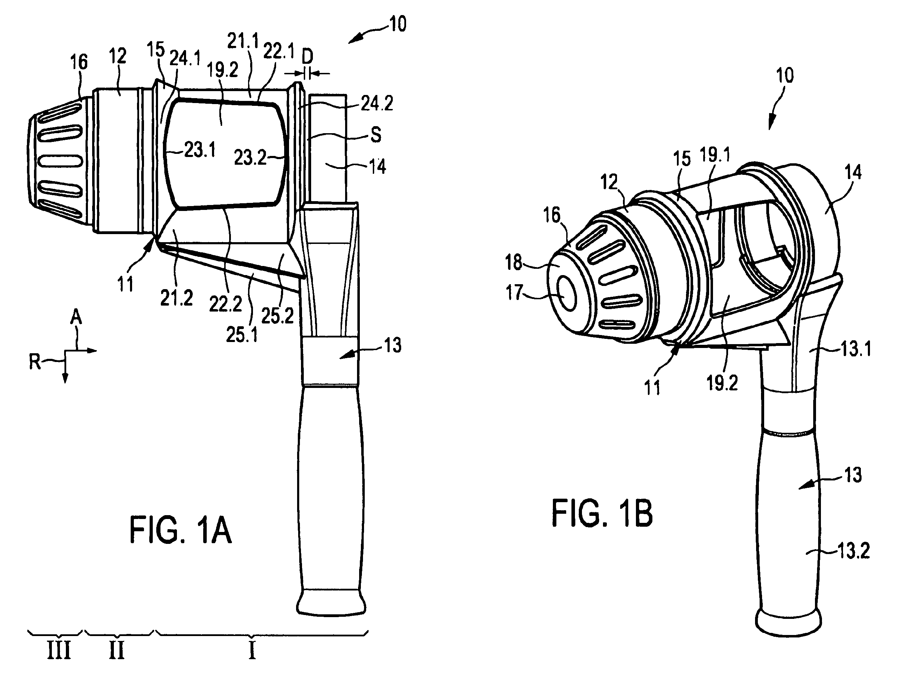

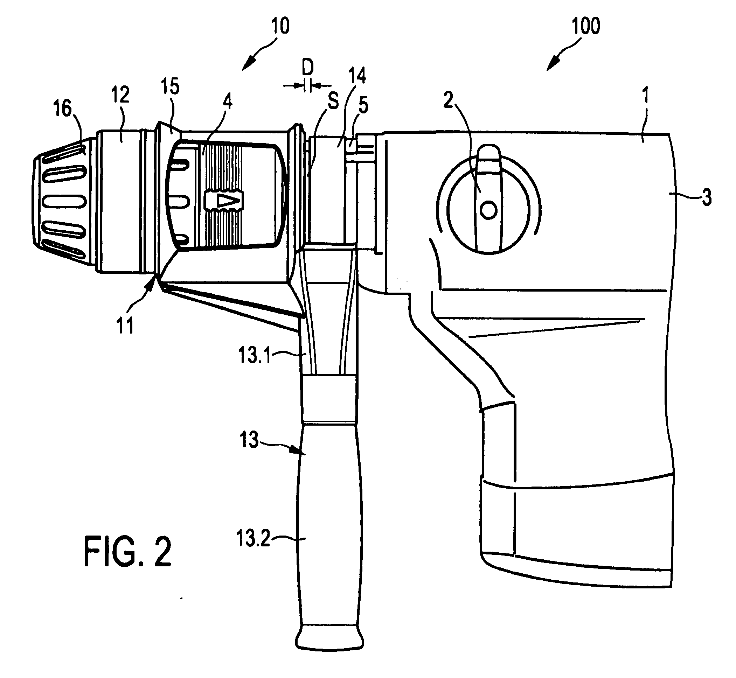

Fig. 1A und Fig. 1B zeigen eine Zusatzeinrichtung 10 in Form einer Staubschutzeinrichtung für eine in Fig. 2 näher dargestellte Elektroarbeitsmaschine 1. Die Fig. 2 zeigt die Elektroarbeitsmaschine 1 mit aufgesetzter Zusatzeinrichtung 10 als System 100. Die Elektroarbeitsmaschine 1 ist vorliegend in Form einer elektrisch angetriebenen Bohrhammer-Kombimaschine gebildet. Die Verwendung der nachfolgend beschriebenen Zusatzeinrichtung 10 ist nicht auf Bohrhammer-Kombimaschinen beschränkt sondern vielmehr auch möglich für Schlagbohr-Maschinen oder vorliegend auch besonders vorteilhaft für Meisselhammer-Maschinen. Insbesondere werden solche und andere Elektroarbeitsmaschinen zum Abbau, Abbruch oder für Sanierungsarbeiten, insbesondere im Innenausbau, benutzt, um mineralisches Material wie Stein, Beton oder dergleichen zu zerkleinern und/oder zu bohren. Vorliegend weist die Elektroarbeitsmaschine 1 in Form einer Bohrhammer-Kombimaschine einen Schalter 2 auf, welcher die Elektroarbeitsmaschine 1 zur Ausführung eines Hammerbetriebs, eines Meisselbetriebs oder eines Bohrhammerbetriebs in unterschiedliche Betriebszustände schalten kann. Die Elektroarbeitsmaschine 1 weist ein Maschinengehäuse 3 auf, in dem der nicht näher bezeichnete Elektromotor aufgenommen ist. Der Elektromotor treibt über eine Welle ein nicht näher dargestelltes Werkzeug, beispielsweise einen Bohrer oder einen Meissel oder dergleichen, an, wobei das Werkzeug in einer Werkzeugaufnahme 4 der Elektroarbeitsmaschine aufgenommen ist. Von der Werkzeugaufnahme 4 ist in Fig. 2 vorliegend das vom Anwender hantierbare Futter ersichtlich, das bei geeigneter Betätigung das Werkzeug in der Werkzeugaufnahme 4 arretiert.

Die Zusatzeinrichtung 10 der Fig. 1A und Fig. 1B in Form der Staubaufnahmeeinrichtung hat im Wesentlichen ein dort ersichtliches Gehäuse 11, das größtenteils einstückig als Formteil gebildet ist. Das Gehäuse 11 hat ein Basisteil 12, einen Handgriff 13 sowie eine Befestigungseinrichtung 14. Über die vorliegend als Klemmschelle ausgeführte Befestigungseinrichtung 14 ist die Staubauffangeinrichtung klemmend an einer Halspartie 5 des Maschinengehäuses 3 der Elektroarbeitsmaschine 1 befestigt. Die Halspartie 5 bildet praktisch den der Werkzeugaufnahme 4 zunächst angeordneten, vorderen Abschluss des Maschinengehäuses 3. Weiter weist das Gehäuse 11 der Zusatzeinrichtung 10 in Form der Staubauffangeinrichtung einen -einseits des Basisteils 12- zwischen dem Basisteil 12 und der Befestigungseinrichtung 14 angeordneten Hantierabschnitt 15 sowie eine -anderseits des Basisteils- dem Hantierabschnitt 15 in axialer Richtung gegenüberliegende am Basisteil 12 festgemachte Frontkappe 16 auf. Das Basisteil 12 kann, muss aber nicht, am Hantierabschnitt 15 einstückig festgemacht sein. Die Frontkappe 16 kann, muss aber nicht, am Basisteil 12 einstückig festgemacht sein. In dem durch die Frontkappe 16 sowie dem Basisteil 12 gebildeten Frontbecher ist eine nicht näher einsehbare Aufnahmekammer gebildet. Diese dient zur Aufnahme von Staub oder dergleichen Zerkleinerungsgut, das beim Bohren und/oder Meisseln entsteht. Im Übrigen weist eine Frontseite 18 der Frontkappe 16 eine vergleichsweise eng in Bezug auf das Werkzeug ausgelegte Durchführungsöffnung 17 auf, so dass die Frontseite 18 ein wirksames Staubschutz-Spülschott bildet, um einen Staubeintritt in die Werkzeugaufnahme 4 weitgehend zu unterbinden. Etwaiger dennoch über die Frontseite 18 eintretender Staub kann in der zuvor erläuterten Aufnahmekammer in der Frontkappe 16 und dem Basisteil 12 verbleiben.

Darüberhinaus weist der Hantierabschnitt 15 eine die Werkzeugaufnahme 4 beidseitig frei zugänglich lassende erste Öffnung 19.1 und zweite Öffnung 19.2 auf. Die ersten und zweiten Öffnungen 19.1, 19.2 sind vorliegend durch einen oberen axial verlaufenden Steg 21.1 sowie unteren axial verlaufenden Steg 21.2 an ihren Ober- bzw. Unterkanten 22.1, 22.2 begrenzt. Außerdem sind die erste und zweite Öffnung 19.1, 19.2 an ihrer in axialer Richtung A vorderen Kante bzw. hinteren Kante 23.1, 23.2 durch jeweils eine umfänglich verlaufende Ringstrebe 24.1, 24.2 des Hantierabschnitts 15 begrenzt. Die erste und zweite Öffnung 19.1, 19.2 des Hantierabschnitts 15 ermöglichen einen beidseitigen Zugriff zur Werkzeugaufnahme 4 für den Anwender. Selbst bei aufgesetzter Zusatzeinrichtung 10 kann ein Werkzeug aus der Werkzeugaufnahme 4 problemlos entfernt oder eingefügt werden, indem durch die Öffnungen 19.1, 19.2 des Hantierabschnitts 15 die Werkzeugaufnahme 4 betätigt, d.h. entweder gelöst oder arretiert wird.

Darüberhinaus ist der Werkzeugaufnahme 4 aufgrund der ersten und zweiten Öffnung 19.1, 19.2 ein ausreichender seitlicher Freiraum bzw. Ausweichraum zur Verfügung gestellt. Eine Zusatzeinrichtung 10 könnte sich also gegenüber der Werkzeugaufnahme 4 schlagbedingt durchaus um ein beträchtliches Maß verschieben ohne dass es zu einem ungewünschten kraftübertragenden Kontakt zwischen Werkzeugaufnahme 4 und Zusatzeinrichtung 1 käme. Dadurch wird vor allem verhindert, dass ein rotierendes Teil der Werkzeugaufnahme 4 am Gehäuse 11 der Zusatzeinrichtung 10 schleift und diese mitnimmt oder gar in Rotation versetzt. Insofern bieten die erste und die zweite Öffnung 19.1, 19.2 im Hantierabschnitt 15 des Gehäuses 11 eine Entkopplung von Elektroarbeitsmaschine 1 und Zusatzeinrichtung 10 hinsichtlich unerwünschter Relativbewegungen derselben.

Darüberhinaus ist das Basisteil 12, der Hantierabschnitt 15 und die Befestigungseinrichtung 14 in einer in Fig. 1A gezeigten axialen Richtung A nebeneinander angeordnet, wobei der Handgriff 13 in einer ebenfalls in Fig.1A gezeigten radialen Richtung R von der Befestigungseinrichtung 14 absteht. Der Hantierabschnitt 15 ist mit dem radial abstehenden Handgriff 13 - vorliegend über zwei dreiecksförmige Stützrippen 25.1, 25.2 an einem zwischen Handteil 13.2 und Befestigungseinrichtung 14 liegenden Kopf 13.1 des Handgriffs 13 - unmittelbar verbunden. Demgegenüber ist der Hantierabschnitt 15 unter Belassen eines Abstands D neben der Befestigungseinrichtung 14 angeordnet. Mit anderen Worten besteht ein Spalt S zwischen Befestigungseinrichtung 14 und Hantierabschnitt 15. Dies führt zu einer im Wesentlichen U-förmigen Anordnung von Hantierabschnitt 15, Handgriff 13 und Befestigungseinrichtung 14. Diese über die Stützen 25.1, 25.2 vergleichsweise stabil und dennoch schwingungsfähige U-förmige Anordnung erlaubt eine besonders vorteilhafte Dämpfung von unerwünschten Schlägen, Vibrationen oder dergleichen bereits in der Zusatzeinrichtung 10, sodass diese allenfalls in gemindertem Masse oder gar nicht auf das Maschinengehäuse 3 der Elektroarbeitsmaschine 1 übertragen werden können. Auf die Frontkappe 16, das Basisteil 12 oder den Hantierabschnitt 15 einwirkende Kräfte können unter Veränderung des Abstands D des Spaltes S ausgeglichen werden.

Die Kombination einer am Hantierabschnitt 15 vorhandenen die Werkzeugaufnahme 4 seitlich frei zugänglich lassenden Öffnung 19.1, 19.2 mit der nur mittelbaren Befestigung des Hantierabschnitts 15 an der Befestigungseinrichtung 14 unter Belassen eines Spaltes S realisiert eine besonders vorteilhafte Entkopplung der Zusatzeinrichtung 10 von der Elektroarbeitsmaschine 1. Letztlich führt dies zu einer sehr viel geringeren Beanspruchung eines Gehäuses 3 der Elektroarbeitsmaschine 1 sowie einer angenehmeren Handhabung des Systems durch den Anwender, welcher die Elektroarbeitsmaschine 1 am Handgriff 13 hält. Um darüberhinaus die Handhabung des Systems 100 angenehmer zu gestalten ist vorliegend wenigstens der Handteil 13.2 des Handgriffs 13 -in einer Abwandlung gegebenenfalls auch der Kopf 13.1 und/oder ein Hantierabschnitt 15- aus einem weicheren Material gefertigt als beispielsweise das Basisteil 12 oder die Befestigungseinrichtung 14 des Gehäuses 11.

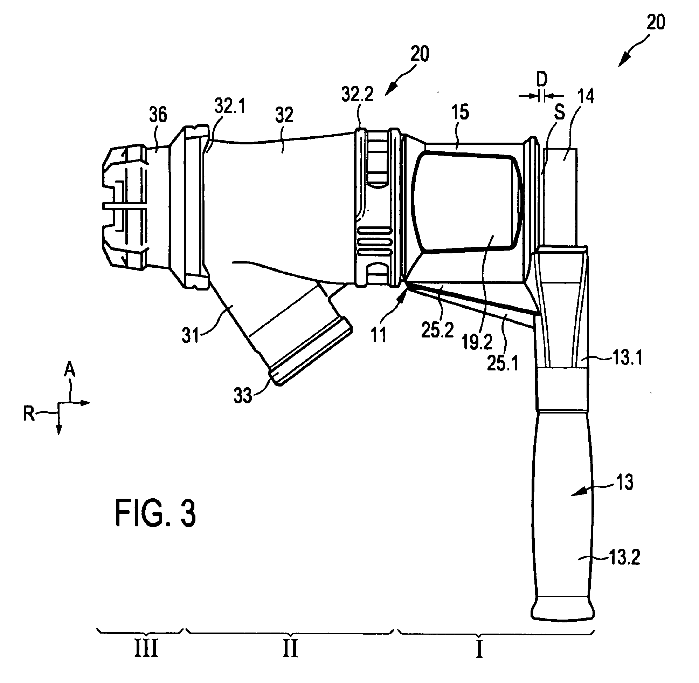

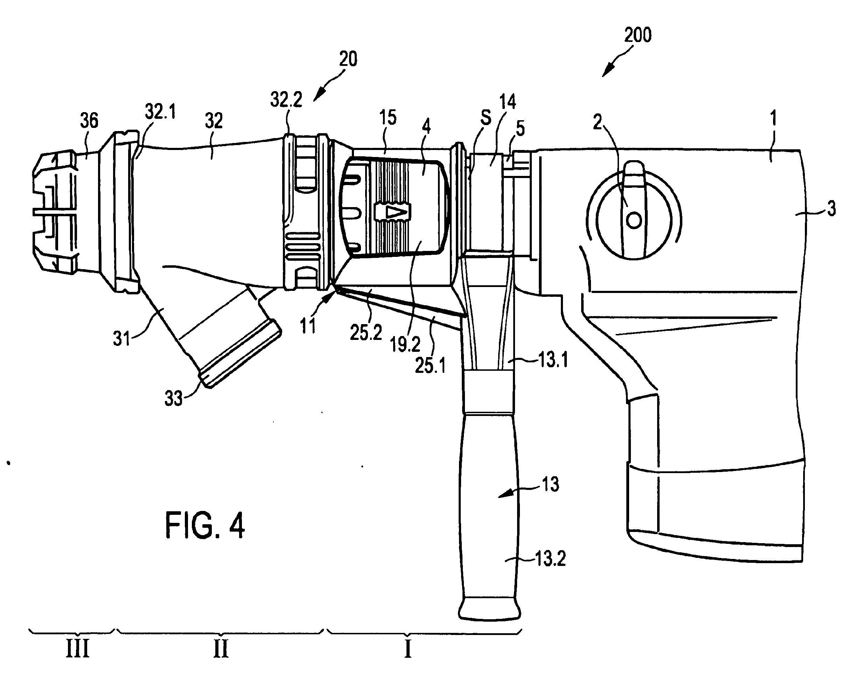

Aus Fig. 3 ist eine abgewandelte Ausführungsform einer Zusatzeinrichtung 20 ersichtlich, die in Fig. 4 als System 200 zusammen mit der bereits zuvor erläuterten Elektroarbeitsmaschine 1 gezeigt ist. Im Folgenden werden für identische oder ähnliche Teile oder Teile identischer oder ähnlicher Funktion, wo zweckmäßig, gleiche Bezugszeichen verwendet. Die grundsätzliche Ausführung des Hantierabschnitts 15, des Handgriffs 13 und der Befestigungseinrichtung 14 der Zusatzeinrichtung 20 entspricht im Wesentlichen derjenigen der Zusatzeinrichtung 10 wie sie anhand von Fig. 1A bis Fig. 2 erläutert wurde. Der Hantierabschnitt 15, der Handgriff 13 und mit Einschränkung die Befestigungseinrichtung 14 sind bei beiden Zusatzeinrichtungen 10, 20 einstückig gebildet. Darüberhinaus ist in Abwandlung zur Zusatzeinrichtung 10 die vorliegende Zusatzeinrichtung 20 der Fig. 3 und Fig. 4 als Staubabsaugeinrichtung ausgebildet. Dazu weist ein abgewandeltes Basisteil 32 der Zusatzeinrichtung 20 einen Absaugstutzen 31 auf, an dessen Sauganschluss 33 ein hier nicht dargestellter Absaugschlauch und Sauger befestigt werden kann. Etwaig über die ebenfalls abgewandelte Frontkappe 36 eindringender Staub kann somit in einer Aufnahmekammer in dem durch die Frontkappe 36 und das Basisteils 32 gebildeten Frontbecher nicht nur aufgefangen sondern zudem über den Absaugstutzen 31 abgesaugt werden.

Die Zusatzeinrichtung 10 der Fig.1A bis Fig.2 kann mit Hantierabschnitt, Handgriff 13, Befestigungseinrichtung 14 als auch Basisteil 12 und Frontkappe 16 einstückig ausgebildet sein. In einer Abwandlung kann auch die Frontkappe 16 und das Basisteil 12 lösbar fest aneinander angebracht sein. Ebenso kann das Basisteil 12 lösbar fest an dem Hantierabschnitt 15 angebracht sein. Die vorliegende abgewandelte Zusatzeinrichtung 20 sieht am Basisteil 32 einen ersten Adapteranschluss 32.1 und einen zweiten Adapteranschluss 32.2 vor. Über die Adapteranschlüsse 32.1 bzw. 32.2 können die Frontkappe 36 bzw. der Hantierabschnitt 15 am Basisteil lösbar fest angebracht und wieder gelöst werden. Mit anderen Worten kann durch Öffnen der Adapteranschlüsse 32.1 bzw. 32.2 das Basisteil 32 vom Hantierabschnitt 15 abgenommen werden. Ebenso kann die Frontkappe 36 vom Basisteil 32 abgenommen werden.

In einer hier nicht im Einzelnen dargestellten Ausführungsform kann bei dem so verbleibenden Hantierabschnitt 15, Handgriff 13 und Befestigungseinrichtung 14 der Zusatzeinrichtung 20 ein anderes Basisteil als das in Fig.3 und Fig.4 gezeigte Basisteil 32 - beispielsweise ein mit Adapteranschluss versehenes Basisteil 12 mit einer Frontkappe 16 der Fig.1A bis Fig.2- angesetzt werden. Grundsätzlich können Abschnitte II und III einer Zusatzeinrichtung 10, 20 unter Zurverfügungstellung entsprechender Adapteranschlüsse am Basisteil 32 oder am Basisteil 12 bzw. an der Frontkappe 16 oder der Frontkappe 36 am Abschnitt I -nämlich am einstückigen Gehäuseteil aus Hantierabschnitt 15, Handgriff 13 und Befestigungseinrichtung 14- je nach Bedarf angebracht werden. So kann am Hantierabschnitt 15 einer Zusatzeinrichtung 10 oder einer Zusatzeinrichtung 20 wahlweise ein mit Absaugstutzen 31 versehenes Basisteil 32 oder ein einfaches Basisteil 12 angeschlossen werden. Ebenso können je nach Bedarf unterschiedliche Frontkappen 16 oder 36 oder andere Gehäuseköpfe zur Auswechslung vorgesehen sein.

## Patentansprüche

1. Zusatzeinrichtung (10, 20) für eine Elektroarbeitsmaschine (1), die anbringbar an der mit einem Werkzeug in einer Werkzeugaufnahme (4) bestückbaren Elektroarbeitsmaschine (1) ist, mit einem Gehäuse (11), das einen Handgriff (13), und eine Befestigungseinrichtung (14), mit der das Gehäuse (11) an der Elektroarbeitsmaschine (1) befestigbar ist, aufweist,
wobei das Gehäuse (11) ein Basisteil (12, 32) mit einer Aufnahmekammer aufweist, **dadurch gekennzeichnet**, daβ das Gehäuse (11) einen neben der Befestigungseinrichtung (14) angeordneten Hantierabschnitt (15) aufweist, wobei der Hantierabschnitt (15) und die Befestigungseinrichtung (14) in einer axialen Richtung (A) nebeneinander angeordnet sind,
wobei der Hantierabschnitt (15) auf einer axialen Richtung (A) zwischen dem Basisteil (12, 32) und der Befestigungseinrichtung (14) angeordnet ist,
wobei der mit dem Hantierabschnitt (15) und der Befestigungseinrichtung (14) fest verbundene Handgriff (13) über die Befestigungseinrichtung (14) an der Elektroarbeitsmaschine (1) befestigbar ist,
wobei der Hantierabschnitt (15) mit dem in radialer Richtung (R) abstehenden Handgriff (13) unmittelbar verbunden ist und axial in Abstand (D) von der Befestigungseinrichtung (14) angeordnet ist,
wobei der Hantierabschnitt (15) eine wenigstens die Werkzeugaufnahme (4) seitlich frei zugänglich lassende Öffnung (19.1, 19.2) aufweist und die die Werkzeugaufnahme (4) seitlich frei zugänglich lassende Öffnung durch axial verlaufende Axial-Streben (21.1, 21.2) und umfänglich verlaufende Ringstreben (24.1, 24.2) begrenzt ist.

2. Zusatzeinrichtung nach Anspruch 1
**dadurch gekennzeichnet, dass** der Hantierabschnitt (15) mit dem Handgriff (13) über in axialer Richtung verlaufende, insbesondere dreiecksförmige, Stützrippen (25.1, 25.2) fest verbunden ist.

3. Zusatzeinrichtung nach einem der Ansprüche 1 bis 2 **dadurch gekennzeichnet, dass** wenigstens der Hantierabschnitt (15) und der Handgriff (13) einstückig, insbesondere als Formteil, gebildet ist.

4. Zusatzeinrichtung nach einem der Ansprüche 1 bis 3 **dadurch gekennzeichnet, dass** das Gehäuse (11) eine Frontkappe (16, 36) und/oder einen Gehäusekopf aufweist, insbesondere eine Frontkappe (16, 36) mit einer axialen Durchführungsöffnung (17) für das Werkzeug.

5. Zusatzeinrichtung nach einem der Ansprüche 1 bis 4 **dadurch gekennzeichnet, dass** ein Basisteil (12, 32) einstückig am Hantierabschnitt (15) und/oder an einer Frontkappe (16, 36) gebildet ist.

6. Zusatzeinrichtung nach einem der Ansprüche 1 bis 5 **dadurch gekennzeichnet, dass** ein Basisteil (12, 32) einen lösbaren Adapteranschluss (32.1, 32.2) für einen Hantierabschnitt (15) und/oder eine Frontkappe (16, 36) und/oder einen Gehäusekopf aufweist.

7. Zusatzeinrichtung nach einem der Ansprüche 1 bis 6 **dadurch gekennzeichnet, dass** ein Basisteil (12,32) einen Saugstutzen (31) aufweist, an den eine Saugleitung anschliessbar ist, insbesondere der Saugstutzen (31) schräg zu einer axialen Richtung (A) des Basisteils (12, 32) geneigt ist.

8. Zusatzeinrichtung nach einem der Ansprüche 1 bis 7 **dadurch gekennzeichnet, dass** ein Material des Handgriffs (13) und/oder des Hantierabschnitts (15) weicher als ein Material eines Basisteils (12,32) ist.

9. Zusatzeinrichtung nach einem der Ansprüche 1 bis 8, **dadurch gekennzeichnet, dass** der Hantierabschnitt (15) eine die Werkzeugaufnahme (4) beidseitig frei zugänglich lassende erste Öffnung (19.1) und zweite Öffnung (19.2) aufwiest, wobei die erste und zweite Öffnung (19.1, 19.2) an ihrer in axialer Richtung (A) vorderen Kante und hinteren Kante (23.1, 23.2) durch jeweils eine umfänglich verlaufende Ringstrebe (24.1, 24.2) des Hantierabschnitts (15) begrenzt sind.

10. System (100, 200) aus einer Elektroarbeitsmaschine (1) zum Bearbeiten mineralischen Materials, wie Stein, Beton od. dgl. mit einer Werkzeugaufnahme (4) zum Bestücken mit einem Werkzeug und einem Maschinengehäuse (3) sowie aus einer am Maschinengehäuse (3) über eine Befestigungseinrichtung (14) angebrachten Zusatzeinrichtung (10, 20) nach einem der vorhergehenden Ansprüche, **dadurch gekennzeichnet, dass**
das Gehäuse (11) der Zusatzeinrichtung (10, 20) ein Basisteil (12, 32) mit einer Aufnahmekammer und einer Frontkappe (16, 36) sowie einen zwischen dem Basisteil (12, 32) und der Befestigungseinrichtung (14) angeordneten Hantierabschnitt (15) aufweist, der eine wenigstens die Werkzeugaufnahme (4) seitlich frei zugänglich lassende Öffnung (19.1, 19.2) aufweist und wobei der mit dem Hantierabschnitt (15) und der Befestigungseinrichtung (14) fest verbundene Handgriff (13) über die Befestigungseinrichtung (14) an dem Maschinengehäuse (3) befestigt ist.

11. System aus einer Elektroarbeitsmaschine (1) und der Zusatzeinrichtung (10, 20), nach Anspruch 10 **dadurch gekennzeichnet, dass**
eine Öffnungsweite der die Werkzeugaufnahme (4) seitlich frei zugänglich lassenden Öffnung (19.1, 19.2) im Wesentlichen auf die Ausdehnung der Werkzeugaufnahme (4) beschränkt ist.

12. System aus einer Elektroarbeitsmaschine (1) und der Zusatzeinrichtung (10, 20), nach Anspruch 9 oder 10 **dadurch gekennzeichnet, dass**
der Hantierabschnitt (15) nur mittelbar über den Handgriff (13) und die Befestigungseinrichtung (14) am Handgriff (13) am Maschinengehäuse (3) befestigt ist.

13. System aus einer Elektroarbeitsmaschine (1) und der Zusatzeinrichtung (10, 20), nach einem der Ansprüche 10 bis 12 **dadurch gekennzeichnet, dass** an einem Saugstutzen (31) ein Sauger und/oder an einem Adapteranschluss (32.1, 32.2) eine Frontkappe (16) oder ein Saugkopf angeschlossen ist.

## Claims

1. Auxiliary device (10, 20) for an electric machine (1), wherein the auxiliary device can be attached to the electric machine (1) and the electric machine can be equipped with a tool in a tool holder (4), comprising a housing (11) having a handle (13) and a mounting device (14) by means of which the housing (11) can be mounted on the electric machine (4), wherein the housing (11) has a base part (12, 32) comprising a collecting chamber, **characterised in that** the housing (11) has a handling section (15) arranged alongside the mounting device (14), wherein the handling section (15) and the mounting device (14) are arranged alongside one another in an axial direction (A), the handling section (15) is arranged between the base part (12, 32) and the mounting device (14) in an axial direction (A), the handle (13) rigidly connected to the handling section (15) and the mounting device (14) can be mounted on the electric machine (4) by means of the mounting device (14), the handling section (15) is directly connected to the handle (13) projecting in the radial direction (R) and is arranged axially at a distance (D) from the mounting device (14), the handling section (15) has an opening (19.1, 19.2) making at least the tool holder (4) freely accessible from the side and the opening making the tool holder (4) freely accessible from the side is delimited by axially extending axial struts (21.1, 21.2) and circumferentially extending annular struts (24.1, 24.2).

2. Auxiliary device according to one of claims 1, **characterised in that** the handling section (15) is rigidly connected to the handle (13) by means of, in particular, triangular supporting ribs (25.1, 25.2) extending in the axial direction.

3. Auxiliary device according to one of claims 1 to 2, **characterised in that** at least the handling section (15) and the handle (13) are formed integrally, in particular as a moulded part.

4. Auxiliary device according to one of claims 1 to 3, **characterised in that** the housing (11) has a front cap (16, 36) and/or a top, in particular a front cap (16, 36) comprising an axial through opening (17) for the tool.

5. Auxiliary device according to one of claims 1 to 4, **characterised in that** a base part (12, 32) is formed integrally on the handling section (15) and/or on a front cap (16, 36).

6. Auxiliary device according to one of claims 1 to 5, **characterised in that** a base part (12, 32) has a removable adapter connector (32.1, 32.2) for a handling section (15) and/or a front cap (16, 36) and/or a housing top.

7. Auxiliary device according to one of claims 1 to 6, **characterised in that** a base part (12, 32) has a suction connector (31) to which a suction line can be connected, the suction connector (31), in particular, being inclined relative to an axial direction (A) of the base part (12, 32).

8. Auxiliary device according to one of claims 1 to 7, **characterised in that** a material of the handle (13) and/or of the handling section (15) is softer than a material of a base part (12, 32).

9. Auxiliary device according to one of claims 1 to 8, **characterised in that** the handling section 15 has a first opening (19.1) and a second opening (19.2) making the tool holder 4 freely accessible from both sides, the first and second openings (19.1, 19.2) being delimited at their front and rear edges (23.1, 23.2) in the axial direction (A) by respective circumferentially extending annular struts (24.1, 24.2) of the handling section (15).

10. System (100, 200) consisting of an electric machine (1) for machining mineral material, such as stone, concrete or the like, comprising a tool holder (4) designed to be equipped with a tool and a machine housing (3), as well as an auxiliary device (10, 20) attached to the machine housing (3) by means of a mounting device (14) according to one of the preceding claims, **characterised in that** the housing (11) of the auxiliary device (10, 20) has a base part (12, 32) comprising a collecting chamber and a front cap (16, 36), as well as a handling section (15) arranged between the base part (12, 32) and the mounting device (14) and having an opening (19.1, 19.2) making at least the tool holder (4) freely accessible from the side, wherein the handle (13) rigidly connected to the handling section (15) and the mounting device (14) is mounted on the machine housing (3) by means of the mounting device (14).

11. System consisting of an electric machine (1) and the auxiliary device (10, 20) according to claim 10, **characterised in that** the width of the opening (19.1, 19.2) making the tool holder (4) freely accessible from the side is limited essentially to the size of the tool holder (4).

12. System consisting of an electric machine (1) and the auxiliary device (10, 20) according to claim 9 or claim 10, **characterised in that** the handling section (15) is mounted on the machine housing (3) only indirectly by means of the handle (13) and the mounting device (14) on the handle (13).

13. System consisting of an electric machine (1) and the auxiliary device (10, 20) according to one of claims 10 to 12, **characterised in that** a suction device is connected to a suction connector (31) and/or a front cap (16) or a suction head is connected to an adapter connector (32.1, 32.2).

## Revendications

1. Dispositif auxiliaire (10, 20) pour une machine de travail électrique (1), lequel dispositif auxiliaire peut être monté sur la machine de travail électrique (1) pouvant être équipée d'un outil dans un porte-outil (4), ayant un boîtier (11) comportant une poignée (13) et un dispositif de fixation (14) au moyen duquel le boîtier (11) peut être fixé sur la machine de travail électrique (1),
dans lequel le boîtier (11) comporte un élément de base (12, 32) avec une chambre de réception,
**caractérisé en ce que** le boîtier (11) comporte une partie de manipulation (15) agencée à côté du dispositif de fixation (14),
dans lequel la partie de manipulation (15) et le dispositif de fixation (14) sont agencés côte à côte dans une direction axiale (A),
dans lequel la partie de manipulation (15) est agencée sur une direction axiale (A) entre l'élément de base (12, 32) et le dispositif de fixation (14),
dans lequel la poignée (13) fermement reliée à la partie de manipulation (15) et au dispositif de fixation (14) peut être fixée sur la machine de travail électrique (1) par l'intermédiaire du dispositif de fixation (14),
dans lequel la partie de manipulation (15) est directement reliée à la poignée (13) faisant saillie dans la direction radiale (R) et est agencée axialement à une distance (D) du dispositif de fixation (14),
dans lequel la partie de manipulation (15) comporte au moins une ouverture (19.1, 19.2) permettant d'accéder librement au moins au porte-outil (4) par un côté, et l'ouverture permettant d'accéder librement au porte-outil (4) par un côté est délimitée par des entretoises axiales (21.1, 21.2) s'étendant axialement et des entretoises annulaires (24.1, 24.2) s'étendant de manière circonférentielle.

2. Dispositif auxiliaire selon la revendication 1, **caractérisé en ce que** la partie de manipulation (15) est fixement reliée à la poignée (13) par des nervures de support (25.1, 25.2), en particulier de forme triangulaire, s'étendant dans une direction axiale.

3. Dispositif auxiliaire selon l'une quelconque des revendications 1 à 2, **caractérisé en ce qu'**au moins la partie de manipulation (15) et la poignée (13) sont formées d'un seul tenant, en particulier sous forme de pièce moulée.

4. Dispositif auxiliaire selon l'une quelconque des revendications 1 à 3, **caractérisé en ce que** le boîtier (11) comporte une coiffe avant (16, 36) et/ou une tête de boîtier, en particulier une coiffe avant (16, 36) avec une ouverture traversante axiale (17) pour l'outil.

5. Dispositif auxiliaire selon l'une quelconque des revendications 1 à 4, **caractérisé en ce qu'**un élément de base (12, 32) est formé d'un seul tenant sur la partie de manipulation (15) et/ou sur une coiffe avant (16, 36).

6. Dispositif auxiliaire selon l'une quelconque des revendications 1 à 5, **caractérisé en ce qu'**un élément de base (12, 32) comporte un raccord d'adaptateur amovible (32.1, 32.2) pour une partie de manipulation (15) et/ou une coiffe avant (16, 36) et/ou une tête de boîtier.

7. Dispositif auxiliaire selon l'une quelconque des revendications 1 à 6, **caractérisé en ce qu'**un élément de base (12, 32) comporte une buse d'aspiration (31) à laquelle un tuyau d'aspiration peut être raccordé, la buse d'aspiration (31) étant en particulier inclinée obliquement par rapport à une direction axiale (A) de l'élément de base (12, 32).

8. Dispositif auxiliaire selon l'une quelconque des revendications 1 à 7, **caractérisé en ce qu'**un matériau de la poignée (13) et/ou de la partie de manipulation (15) est plus souple qu'un matériau d'un élément de base (12, 32).

9. Dispositif auxiliaire selon l'une quelconque des revendications 1 à 8, **caractérisé en ce que** la partie de manipulation (15) comporte une première ouverture (19.1) permettant d'accéder librement au porte-outil (4) par un côté et une seconde ouverture (19.2), dans lequel les première et seconde ouvertures (19.1, 19.2), sur leur bord avant et leur bord arrière (23.1, 23.2) dans la direction axiale (A), sont respectivement délimitées par une entretoise annulaire (24.1, 24.2) de la partie de manipulation (15) s'étendant de manière circonférentielle.

10. Système (100, 200) constitué d'une machine de travail électrique (1) pour travailler des matières minérales, telles que de la pierre, du béton ou analogue, comportant un porte-outil (4) devant être équipé d'un outil et un boîtier de machine (3), ainsi que d'un dispositif auxiliaire (10, 20) monté sur le boîtier de machine (3) par l'intermédiaire d'un dispositif de fixation (14) selon l'une quelconque des revendications précédentes, **caractérisé en ce que** le boîtier (11) du dispositif auxiliaire (10, 20) comporte un élément de base (12, 32) muni d'une chambre de réception et d'une coiffe avant (16, 36), ainsi qu'une partie de manipulation (15) agencée entre l'élément de base (12, 32) et le dispositif de fixation (14), laquelle partie de manipulation (15) comporte au moins une ouverture (19.1, 19.2) permettant d'accéder librement au moins au porte-outil (4) par un côté et dans lequel la poignée (13) fermement reliée à la partie de manipulation (15) et au dispositif de fixation (14) est fixée sur le boîtier de machine (3) par l'intermédiaire du dispositif de fixation (14).

11. Système constitué d'une machine de travail électrique (1) et du dispositif auxiliaire (10, 20) selon la revendication 10, **caractérisé en ce qu'**une largeur d'ouverture de l'ouverture (19.1, 19.2) permettant d'accéder librement au porte-outil (4) par un côté est sensiblement limitée par l'extension du porte-outil (4).

12. Système constitué d'une machine de travail électrique (1) et du dispositif auxiliaire (10, 20) selon la revendication 9 ou 10, **caractérisé en ce que** la partie de manipulation (15) est fixée uniquement indirectement par l'intermédiaire de la poignée (13) et du dispositif de fixation (14) sur la poignée (13) sur le boîtier de machine (3).

13. Système constitué d'une machine de travail électrique (1) et du dispositif auxiliaire (10, 20) selon l'une quelconque des revendications 10 à 12, **caractérisé en ce qu'**un aspirateur est raccordé à une rainure d'aspiration (31) et/ou une coiffe avant (16) ou une tête d'aspiration est raccordé à un raccord d'adaptateur (32.1, 32.2).
